Europäisches Patentamt

(19) European Patent Office

Office européen des brevets

(11) Veröffentlichungsnummer: **0 095 030**
**B1**

(12) **EUROPÄISCHE PATENTSCHRIFT**

(45) Veröffentlichungstag der Patentschrift:
11.06.86

(21) Anmeldenummer: 83103234.7

(22) Anmeldetag: 31.03.83

(51) Int. Cl.⁴: **B 66 C 1/06**, B 65 G 47/92

(54) Hebevorrichtung.

(30) Priorität: 02.04.82 DE 3212464

(43) Veröffentlichungstag der Anmeldung:
30.11.83 Patentblatt 83/48

(45) Bekanntmachung des Hinweises auf die Patenterteilung:
11.06.86 Patentblatt 86/24

(84) Benannte Vertragsstaaten:
AT CH DE FR GB IT LI

(56) Entgegenhaltungen:
DE - C - 238 283
DE - C - 266 926
DE - C - 851 683

(73) Patentinhaber: EMAG MASCHINENFABRIK GMBH,
Austrasse 24, D-7335 Salach/Württemberg (DE)

(72) Erfinder: Scholl, Herbert, Dr., Buchenrain 149,
D-7320 Göppingen (DE)
Erfinder: Metz, Rudi, Dr.-Frey-Strasse 50,
D-7322 Donzdorf (DE)

(74) Vertreter: Zmyj, Erwin, Dipl.-Ing., Postfach 95 04 28,
D-8000 München 95 (DE)

## Beschreibung

Die Erfindung bezieht sich auf eine Hebevorrichtung mit zumindest einem Hebemagneten mit dem Oberflächenverlauf des zu hebenden Teiles anpaßbarem Magnetpolpaar.

Bei einem bekannten Hebemagneten dieser Art (DE-C- 851 683) ist nur ein Pol des zweipoligen Magneten verschiebbar, wobei der feststehende Pol topfförmig und der verschiebbare, im Zentrum dieses topfförmigen Poles angeordnete Pol als Stempel ausgebildet ist, um Kugeln mit unterschiedlichen Durchmessern erfassen zu können. Für das Anheben und Transportieren von langgestreckten Werkstücken, insbesondere von Wellen, ist dieser Hebemagnet nicht geeignet.

Eine ähnliche Ausgestaltung, bei der die beiden äußeren Pole mit verschiebbaren Platten versehen sind, ergibt sich aus der DE-C- 238 283.

Eine andere bekannte Ausgestaltung eines Magneten (DE-C- 265 926) sieht für den Transport von Spänen und anderen ähnlichen Kleinteilen eine verschiebbare Anordnung aller drei Magnetpole gegenüber den Spulenkörpern vor, um die Länge der Kraftlinien durch das Material zu vergrößern. Diese Problemstellung ist bei der vorliegenden Erfindung nicht gegeben.

Aufgabe der Erfindung ist es, den als Greifer dienenden Hebemagneten so auszugestalten, daß er für Werkstücke unterschiedlichen Durchmessers und unterschiedlicher Länge verwendbar ist.

Diese Aufgabe wird ausgehend von einer Hebevorrichtung der im Oberbegriff des Anspruchs 1 angegebenen Art erfindungsgemäß dadurch gelöst, daß jeder Magnetpol aus mindestens zwei wenigstens teilweise teleskopartig in vertikaler Richtung und/oder horizontaler Längsrichtung des aufzunehmenden Teiles verschiebbaren Teilen aufgebaut ist und daß jeweils einander entsprechende Magnetteile unterschiedlicher Polarität paarweise verschiebbar sind.

Aufgrund dieser Verlängerbarkeit bzw. Auseinanderziehbarkeit des Haftmagneten sowohl in Längsrichtung der Eisenleitteile als auch quer hierzu wird die eingangs gestellte Aufgabe gelöst. Bei Verlängerung des Haftmagneten in Richtung der Eisenleitteile kann aus dem Greifer ein Teil mit geringerer Abmessung für Werkstücke geringeren Durchmessers ausgefahren werden, während im eingefahrenen Zustand der gesamte Greifer mit seiner großen Haftfläche für Werkstücke mit großen Durchmessern eingesetzt werden kann. Bei der Verlängerbarkeit des Haftmagneten quer zur Längsrichtung der Eisenleitstücke werden größere Abstände zwischen den Polflächen geschaffen, wodurch der Haftmagnet in der Lage ist längere Werkstücke bei verringerter Gefahr des Abkippens derselben zu erfassen.

Die erfindungsgemäße Ausgestaltung umfaßt nicht nur eine symmetrische Anordnung der ausfahrbaren Teile in Bezug auf die feststehenden Teile des Magneten sondern auch eine asymmetrische, was sich daraus ergibt, daß wenigstens ein Eisenleitstück zumindest teilweise teleskopartig ineinanderschiebbare Teile aufweist. Es ist also eine Ausführungsform möglich, bei der ein feststehender Pol oder mehrere feststehende Pole vorgesehen sind, während ein anderer Pol oder mehrere andere Pole ausschiebbare Teile aufweisen, wobei die ausschiebbaren Teile ebenso wie die feststehenden Teile entsprechend den jeweiligen Erfordernissen nicht nur als geradlinige Teile ausgebildet sind, die den feststehenden Teilen ähnlich sind, sondern die ausschiebbaren Teile können an ihren vorderen Enden abgebogene, abgekröpfte oder in anderer beliebiger Weise den jeweiligen Werkstück angepaßte Formgebungen aufweisen.

Bei der vorteilhaften Ausgestaltung der Erfindung ist bzw. sind das oder die ausfahrbaren Teile des Greifers symmetrisch in Bezug auf seine Polteilung ausgebildet. Dies bedeutet, daß bei einer Ausfahrbarkeit in Richtung der Eisenleitstücke der ausfahrbare Teil ähnlich dem Gesamtgreifer aufgebaut ist, d. h. wenn der Greifer beispielsweise zwei Magnetpole aufweist, die durch einen Luftspalt oder durch ein amagnetisches Material voneinander getrennt sind, so weist der ausfahrbare Teil den gleichen Aufbau auf.

Die verschiebbaren Teile können frei verschiebbar geführt oder mittels einer Antriebsvorrichtung verschiebbar sein, die einen Elektromotor oder eine hydraulische oder pneumatische Antriebseinheit umfassen kann. Die frei verschiebbare Ausgestaltung hat insbesondere dann Vorteile, wenn die ausfahrbaren Teile in Richtung der Eisenleitteile verschiebbar sind, so daß sie aufgrund ihrer freien Verschiebbarkeit und des Eigengewichtes nach untenüber die Pole des großen Haftmagneten hervorstehen und so beim Aufsuchen eines Werkstückes bereits in ihrer Betriebslage sich befinden, wenn kleinere Werkstücke aufgenommen werden sollen. Sollen dagegen größere Werkstücke aufgenommen werden, so werden diese frei verschiebbaren Teile beim Aufnehmen des großen Werkstückes infolge der Magnetkraft des Gesamtmagneten in diesen hineingedrückt. Außerdem wird beim Aufsuchen eines Werkstückes eine besondere Empfindlichkeit der Sensoreinrichtung gesteigert, weil der Abstand zwischen zwei Polen, zwischen denen die Sensoreinrichtung angeordnet ist, bei den ausfahrbaren Teilen geringer ist als bei denjenigen Teilen gegenüber denen die ausfahrbaren Teile verschiebbar geführt sind. Die Anordnung einer Antriebsvorrichtung empfiehlt sich vor allen Dingen dann, wenn dee Teile quer zur Längsrichtung der Eisenleitteile ausgefahren werden sollen, d.h. wenn die Teile in horizontaler Richtung verfahren werden sollen, so daß die Schwerkraft für diesen Verschiebevorgang nicht herangezogen werden kann.

In weiterer Ausgestaltung der Erfindung kann eine programmierbare Steuerung vorgesehen sein, die in Abhängigkeit vom Werkstückdurchmesser bzw. der Werkstücklänge das Ein- oder Ausfahren der ausfahrbaren Teile steuert. Das Ausfahren eines oder mehrerer ausfahrbarer Teile kann auch dadurch gesteuert werden, daß dem ausfahrbaren Teil eine Sensoreinrichtung zugeordnet ist, die in der Lage ist das Ende eines Werkstückes aufgrund der eintretenden Magnetfeldänderung zu erkennen, so daß man für solche Fälle auf programmierbare Steuerungen verzichten kann. Es ist also eine Ausführungsform möglich, bei der Sensoreinrichtungen vorgesehen sind, mit deren Hilfe das eine Ende eines Werkstückes festgestellt wird, worauf mit Hilfe des ausfahrbaren Teiles, dem ebenfalls eine Sensoreinrichtung zugeordnet ist, das andere Ende des Werkstückes erkannt werden kann, wodurch ein sicheres Ergreifen des Werkstückes aufgrund möglicher größerer Abstände der Pole gewährleistet werden kann. Selbstverständlich ist diese Ausfahrbarkeit auch dann von Vorteil, wenn die Werkstücksgröße das ausfahrbare Maß übersteigt, da durch das Verschieben der Teile in horizontaler Richtung und der damit verbundenen Abstandsvergrößerung der Magnetpole ein sicheres Ergreifen langer Werkstücke möglich ist.

Die Erfindung ist in der Zeichnung beispielsweise dargestellt. In dieser zeigen:

Fig. 1 eine teilweise geschnittene schaubildliche Darstellung einer ersten Ausführungsform eines Magnet-Greifers einer Transportvorrichtung und

Fig. 2 eine weitere Ausführungsform des Haftmagneten.

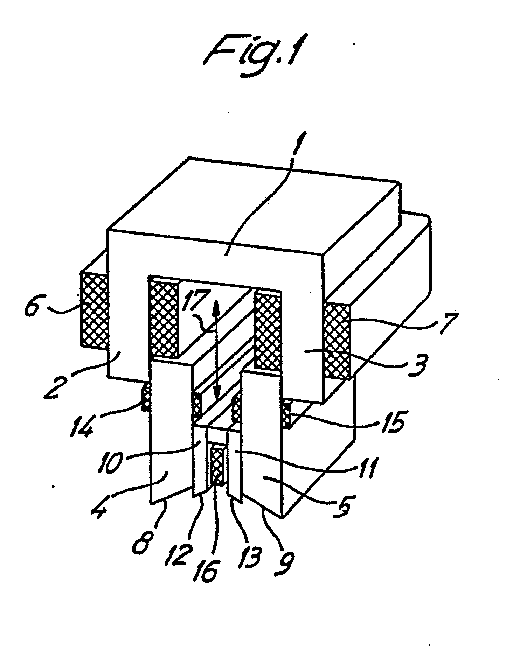

Der in Fig. 1 dargestellte Haftmagnet weist ein Joch 1 und zwei Schenkel 2 und 3 auf, die durch nach innen angesetzte Zwischenstücke 4 und 5 verlängert sind, die gleichzeitig einen engeren Abstand zwischen den Schenkeln des Magneten herbeiführen. Um die Schenkel 2 und 3 sind Erregerwicklungen 6 und 7 angeordnet. Die Zwischenstücke 4 und 5 weisen schräg zueinander geneigte Polflächen 8 und 9 auf, die einen Winkel von etwa 120° miteinander einschließen.

In dem Raum zwischen den Zwischenstücken 4 und 5 sind ausschiebbare oder ausfahrbare Teile 10 und 11 angeordnet, welche in ihrem ausgefahrenen Zustand eine Verlängerung der Zwischenstücke 4 und 5 bilden und an ihrer Unterseite Polflächen 12 und 13 aufweisen, die den gleichen Neigungswinkel wie die Polflächen 8 und 9 besitzen. Aus diesem Grunde fluchten die Polflächen 8 und 12 bzw. 9 und 13 in der vollständig eingefahrenen Stellung der ausfahrbaren Teile 10 und 11 miteinander. In der eingefahrenen Stellung dient der Haftmagnet zum Transport von Werkstücken mit größerem Durchmesser, während bei kleinen Durchmessern die Teile 10 und 11 so weit ausgefahren werden, daß die Werkstücke mit den Polflächen 12 und 13 erfaßt werden können.

Die ausfahrbaren Teile 10 und 11 stellen somit eine Verlängerung der Eisenleitstücke dar und weisen demzufolge die gleiche Polarität wie die mit ihnen in Verbindung stehenden Eisenleitstücke auf. Die Teile 10 und 11 bilden also einen ausfahrbaren Magnet, der die gleiche Polarität bzw. Polteilung wie der Gesamtmagnet aufweist.

Um die Zwischenstücke 4 und 5 sind Induktionsspulen 14 und 15 angeordnet die als Sensoreinrichtungen dienen und die Änderungen des Magnetfeldes aufgrund einer Annäherung eines ferromagnetischen Körpers feststellen. Eine weitere Sensoreinrichtung in Form einer Induktionsspule 16 ist zwischen den ausfahrbaren Teilen 10 und 11 vorgesehen. An Stelle der Induktionsspule 16 kann auch ein Halbleiterplättchen vorgesehen sein, was insbesondere dann von Vorteil ist, wenn der Magnet als Gleichstrommagnet ausgebildet ist.

Obwohl dies zwar aus der zeichnerischen Darstellung hervorgeht, sei darauf hingewiesen, daß die ausfahrbaren Teile 10 und 11 in Längsrichtung der Eisenleitteile 4 und 5 ausfahrbar sind. Die Verschieberichtung ist durch den Doppelpfeil 17 kenntlich gemacht.

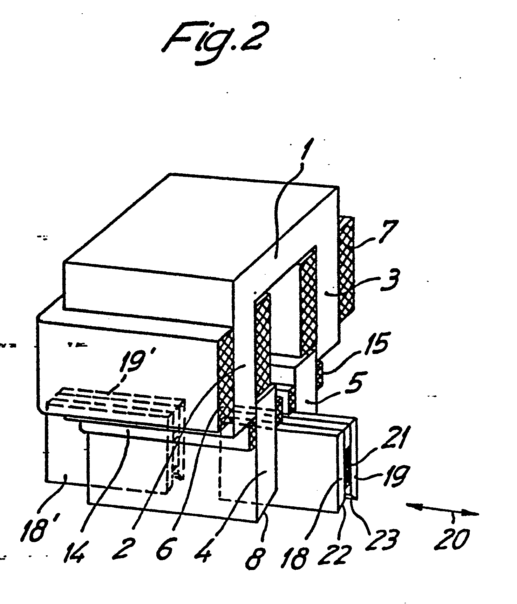

In Fig. 2 ist ein Haftmagnet dargestellt, der bis auf die ausfahrbaren Teile in seinem Aufbau dem Haftmagneten gemäß Fig. 1 entspricht, so daß einander entsprechende Teile mit den gleichen Bezugszeichen versehen sind.

Zwischen den Zwischenstücken 4 und 5 der Eisenleitteile sind ausfahrbare Teile 18, 18' und 19, 19' vorgesehen, wobei die Teile 18 und 18' die Polarität des Schenkels 2, 4 und die Teile 19, 19' die Polarität des Schenkels 3, 5 aufweisen. Die ausfahrbaren Teile sind quer zur Längsrichtung der Eisenleitteile verfahrbar, wobei die Verschieberichtung durch den Doppelpfeil 20 kenntlich gemacht ist.

Durch diese Ausfahrbarkeit quer zur Längsrichtung der Eisenleitstücke werden die äußeren Abstützpunkte der Polflächen je nach Verschieberichtung entweder weiter voneinander entfernt oder näher zusammengebracht. Im eingefahrenen Zustand dient der Haftmagnet zum Transportieren von verhältnismäßig kurzen Werkstücken, während beim Transport von längeren Werkstücken die ausfahrbaren Teile nach außen geschoben werden, um die Abstützung zu verbessern und somit der Gefahr eines Abkippens der angezogenen Werkstücke zu begegnen.

Zwischen den ausfahrbaren Teilen 18, 18' und 19, 19' ist eine Sensoreinrichtung 21 in Form einer Induktionsspule vorgesehen. Diese Sensoreinrichtung kann aber auch als Halbleiterplättchen ausgebildet sein. Diese Sensoreinrichtung dient, wie die Sensoreinrichtung 16 bei der Ausführungsform nach Fig. 1 zum Auffinden von Werkstücken in einem Vorratsbehälter, d. h. diese Sensoreinrichtung erfaßt die Magnetfeldänderung, die sich aufgrund einer Annäherung eines ferromagnetischen Körpers ergibt.

Die ausfahrbaren Teile 18, 18', 19 und 19' bilden ebenso wie die ausfahrbaren Teile 10 und 11 bei der Ausführungsform nach Fig. 1 einen Teil des Magneten, der in seiner Polarität derjenigen des Hauptmagneten entspricht und die Anpassungsfähigkeit des Haftmagneten an unterschiedliche Werkstücklängen fördert.

Die Eisenleitstücke 4 und 5 verdichten den Streufluß bezogen auf die Flächeneinheit, da sie einen geringeren Abstand aufweisen als die Schenkel 2 und 3. Eine solche Beeinflußung des Streuflusses ließe sich auch dadurch erzielen, daß die Schenkel 2 und 3 abgekröpft und nach innen eingezogen sind, wobei die unteren Teile, die den Zwischenstücken 4 und 5 entsprechen dann einen geringeren Abstand zueinander aufweisen als die oberen Teile, die den Teilen 2 und 3 entsprechen. Diese Streuflußbeeinflußung ist insbesondere für die Sensoreinrichtung von Bedeutung, da diese die Änderungen des Streuflusses aufzeigt.

Bei dieser in Fig. 2 dargestellten Ausführungsform sind die Polflächen 8 und 9 der Eisenleitteile 4 und 5 ebenfalls wie bei der Ausführungsform nach Fig. 1 geneigt und die Polflächen 22 und 23 der Teile 18 und 19 weisen den gleichen Neigungswinkel auf und fluchten mit den Polflächen 8 und 9, so daß ein Aufnahmeprisma entsteht, welches in seiner Längsrichtung verlängerbar oder verkürzbar ist. Die Polflächen der Teile 18' und 19' sind in der Zeichnung nicht sichtbar; sie fluchten jedoch mit den Polflächen 22 und 23. Der Haftmagnet kann an jeder beliebigen Transportvorrichtung z. B. nach Art eines Kranes angeordnet sein.

## Patentansprüche

1. Hebevorrichtung mit zumindest einem Hebemagneten (1) mit dem Oberflächenverlauf des zu hebenden Teiles anpaßbarem Magnetpolpaar (8, 9), dadurch gekennzeichnet, daß jeder Magnetpol (8, 9) aus mindestens zwei wenigstens teilweise teleskopartig in vertikaler Richtung (17) und oder/in horizontaler Längsrichtung (20) des aufzunehmenden Teiles verschiebbaren Teilen (2, 4, 10; 3, 5, 11 bzw. 2, 4, 18, 18'; 3, 5, 19, 19') aufgebaut ist und daß jeweils einander entsprechende Magnetteile (10, 11; 18, 19; 18', 19'i unterschiedlicher Polarität paarweise verschiebbar sind.

2. Hebevorrichtung nach Anspruch 1, dadurch gekennzeichnet, daß die verschiebbaren Teile (10, 11; 18, 18'; 19, 19') symmetrisch in Bezug auf die Polteilung ausgebildet sind.

3. Hebevorrichtung nach Anspruch 1 oder 2, dadurch gekennzeichnet, daß die verschiebbaren Teile (10, 11; 18, 19; 18', 19') frei verschiebbar geführt sind.

4. Hebevorrichtung nach Anspruch 1 oder 2, gekennzeichnet durch eine Antriebsvorrichtung für die Verschiebung der ausfahrbaren Teile (10, 11; 18, 18'; 19, 19'), die einen Elektromotor oder eine hydraulische oder pneumatische Antriebseinheit umfaßt.

5. Hebevorrichtung nach einem der Ansprüche 1 bis 4, gekennzeichnet durch eine programmierbare Steuerung, die in Abhängigkeit vom Werkstückdurchmesser bzw. der Werkstücklänge das Ein- oder Ausfahren der ausfahrbaren Teile (10, 11; 18, 18'; 19, 19') steuert.

## Claims

1. Lifting device with at least one lifting magnet (1) with a pair of magnet poles (8, 9) adaptable to the surface shape of the part to be lifted, characterised in that each magnet pole (8, 9) is constructed of at least two components (2, 4, 10; 3, 5, 11 or 2, 4, 18, 18'; 3, 5, 19, 19') displaceable at least partially in telescopic manner in the vertical direction (17) and/or in the horizontal longitudinal direction (20) of the part to be picked up and that corresponding magnetic components (10, 11; 18, 19; 18', 19') of different polarity are displaceable in pairs.

2. Lifting device according to claim 1, characterised in that the displaceable components (10, 11; 18, 18'; 19, 19') are constructed symmetrically with reference to the pole spacing.

3. Lifting device according to claim 1 or 2, characterised in that the displaceable components (10, 11; 18, 19; 18', 19') are freely displaceably guided.

4. Lifting device according to claim 1 or 2, characterised by a drive device for displacement of the extensible components (10, 11; 18, 18'; 19, 19') which comprises an electric motor or a hydraulic or pneumatic drive unit.

5. Lifting device according to one of claims 1 to 4, characterised by a programmable control which controls the extension or retraction of the extensible components (10, 11; 18, 18'; 19, 19') in dependence upon the workpiece diameter or length.

## Revendications

1 - Dispositif de levage comprenant au moins un électro-aimant de levage (1) qui présente une paire de pôles magnétiques (8, 9) adaptable à la configuration superficielle de la pièce à lever, caractérisé en ce que chaque pôle magnétique (8, 9) est constitué d'au moins deux éléments (2, 4, 10; 3, 5, 11; 2, 4, 18, 18'; 3, 5, 19, 19') susceptibles de coulisser au moins en partie télescopiquement en direction verticale (17) et/ou dans la direction longitudinale horizontale (20) de la pièce à soulever et en ce que des éléments magnétiques (10, 11; 18, 19; 18', 19') correspondant respectivement l'un à l'autre et présentant des polarités différentes peuvent coulisser par paire.

2 - Dispositif de levage selon la revendication 1, caractérisé en ce que les éléments (10, 11; 18, 18'; 19, 19') susceptibles de coulisser sont agencés symétriquement par rapport au pas polaire.

3 - Dispositif de levage selon la revendication 1 ou 2, caractérisé en ce que les éléments (10, 11; 18, 19; 18, 18') susceptibles de coulisser sont guidés de façon à pouvoir coulisser librement.

4 - Dispositif de levage selon la revendication 1 ou 2, caractérisé par un mécanisme de commande qui, destiné au coulissement des éléments (10, 11; 18, 18'; 19, 19') déplaçables vers l'extérieur, comprend un moteur électrique ou un organe de commande hydraulique ou pneumatique.

5 - Dispositif de levage selon l'une quelconque des revendications précédentes, caractérisé par une commande programmable qui en fonction du diamètre ou de la longueur de la pièce commande le mouvement de rentrée ou de sortie des éléments (10, 11; 18, 18'; 19, 19') déplaçables vers l'extérieur.

# Fig.1

Fig.2